# EUROPEAN PATENT APPLICATION

(11) **EP 1 078 848 A1**
(43) Date of publication of application: **28.02.2001**
(21) Application number: 99116955.8
(22) Date of filing: 27.08.1999
(51) Int. Cl.: B62J 9/00, B60Q 1/30, B62J 6/04

(54) **Motorbike transport case comprising electric equipment**

(71) Applicant: Visenzi, Giuseppe, I-25100 Brescia (IT)
(72) Inventor: Visenzi, Giuseppe, I-25100 Brescia (IT)
(74) Representative: Seibert, Hannelore

(57) **Abstract**

In a conventional transport case (10), a flexible electric cable (17) passes across a hinge (28) disposed between a base part (11) and a lid part (12) of the transport case (10). The cable (17) is vulnerable and obstructs the inner space of the transport case (10). To overcome these problems, the invention provides the transport case (10) with first and second electric contact members (50, 60) that are in electric contact with each other when the transport case (10) is in its closed state and are not in electric contact with each other when the transport case (10) is in its open state, the first contact member (50) being mechanically attached (possibly retrofitted) to the base part (11) and electrically coupled to a base conductor (17a), and the second contact member (60) being mechanically attached (possibly retrofitted) to the lid part (12) and electrically coupled to a lid conductor (17b). Thus, electric power can be supplied securely and conveniently from a motorbike into a transport case (10) fitted to the rack (30) of the motorbike. The electric power may be fed to a lamp which is installed in the lid part (12) of the transport case (10) and used as a rear light of the motorbike.

## Description

The invention relates to a transport case arranged to be releasably fitted to a motorbike and comprising a base part and a lid part hinged to the base part such that the lid part can be pivoted away from the base part to open the transport case and pivoted toward the base part to close the transport case, the base part being provided with an electric base conductor such as a first wire, and the lid part being provided with an electric lid conductor such as a second wire. The term "motorbike" as used in this specification is meant to encompass motor scooters.

As has been well-known in the art, transport cases that can be attached releasably to a motorbike provide versatility in that the user may employ such a case either separately from a motorbike, e.g. while walking as a pedestrian or working in an office, or in a fitted state, i.e. when driving a motorbike to which the transport case has been fitted so that the user does not have to hold the case manually. A detachable transport case thus provides considerable convenience.

An example of a detachable travel case for a motorbike is described in US patent 3 788 532. The detachable case can be fitted to a stationary baggage container of the motorbike. For traffic safety, the stationary baggage container includes electric equipment such as turn signals and tail lights. Conversely, no electric equipment is provided in the detachable travel case to avoid wiring problems.

According to a Japanese patent application published as JP.A.06/263 072, a transport case can be releasably fitted to the rack of a motorbike and comprises a base part and a lid part hinged to the base part so that the transport case can be opened and closed. When fitted to the motorbike, the transport case might cover and obstruct rear lights of the motorbike. Therefore, electric equipment including a stop lamp is provided in the lid part of the transport case. A cable can be connected to the transport case to supply electric power from the motorbike to the stop lamp when the transport case has been fitted to the motorbike.

A similar transport case comprising electric equipment is disclosed in a European patent application published as EP-A-0 882 644. To facilitate the electric connection between the electric power supply system of the motorbike and a light source provided in the transport case, two base connectors are arranged in the base part of the transport case and two mating carrier connectors are arranged on a carrier platform of the motorbike such that each base connector is automatically brought into electric contact with a respective one of the carrier connectors when the transport case is fitted onto the carrier platform. Thus, electric power supplied from the carrier connectors is received by the base connectors. Inside the transport case, a cable connected to the base connectors conducts the electric power to the light source which is integrated in the lid part of the transport case. The cable is flexible to accommodate the opening and closing movements of the lid part with respect to the base part of the transport case.

However, while it is desirable to arrange a tail light or stop lamp in the lid of the transport case (the lid normally constituting the top of the transport case), the cable connection between the base connectors and the electric lamp mounted in the lid presents a number of drawbacks. Firstly, the cable is subject to wear each time the lid is pivoted with respect to the base part about the hinge of the transport case. Even if the cable is designed to be flexible, the frequent bending thereof may result in a wire of the cable breaking and/or in an insulation failure such that the power supply to the lid lamp might be interrupted or shortcircuited, respectively. If the cable is slack, it may be even squeezed in the hinge between the base part and the lid.

Secondly, the presence of the cable which has to be flexible at least in the vicinity of the hinge inside the transport case interferes with objects to be placed into the transport case. Thus, the inner space of the transport case is not usable as freely and completely as the user would expect it to be. There is even the risk of a user trying to stuff objects into the transport case and thus damaging the cable in the region of the hinge.

Another disadvantage of the flexible cable resides in that its presence may convey the impression of a fragile design, a defect, or a safety hazard because the average user may feel upset by a loose cable even if it actually carries only a low voltage.

Therefore it is a main object of the invention to overcome the aforementioned problems by providing a transport case of the abovementioned type in which electric power is supplied from the base part to the lid part in an improved manner.

This object is achieved by the features that the transport case comprises first and second electric contact members that are in electric contact with each other when the transport case is in its closed state and are not in electric contact with each other when the transport case is in its open state, the first contact member being mechanically attached to the base part and electrically coupled to the base conductor, the second contact member being mechanically attached to the lid part and electrically coupled to the lid conductor such that in the closed state of the transport case the first and second contact members provide an electric connection between the base and lid conductors, and in the open state of the transport case the first and second contact members do not provide an electric connection between the base and lid conductors.

Thus, electric power is fed through contact members that are fixed to the base part and lid part, respectively, and contact each other only in the closed state of the transport case. Owing to this design, the transport case does not require any flexible cable bridging the hinge between the base part and lid part. Hence, no portion of the cable is worn out by the pivoting movements of the lid about the hinge, nor can the cable be pinched in the hinge. The versatility and functionality of the transport case can thus be used more efficiently, reliably and conveniently.

The cable between the base part and the lid part comprises two separate stretches: The first stretch can be fixed to (e.g. embedded in) the wall of the base part, and the second stretch can be fixed to (e.g. embedded in) the wall of the lid part. In this manner, every stretch of the cable can be protected from objects placed in the transport case, and the cable does not obstruct the inner space thereof. As the cable stretches may be fixed (and even hidden) in the transport case, the user need not care for any flexible, slack cable. For example, at least a portion of the lid conductor may be guided in a channel formed on the interior surface of the lid part. Similarly, at least a portion of the base conductor may be guided in a channel formed on the interior surface of the base part.

Another advantage provided by the two contact members resides in that electric equipment powered via the contact members is switched off automatically as soon as the transport case is opened. In the prior art, when the lid part of a transport case comprising a rear light of a motorbike is pivoted upwardly to open the transport case, a rear light beam may be raised from the horizontal plane. Thus, the lamp and reflector of the rear light may blind other drivers when the transport case is opened while being energised from the battery or generator of the motorbike. Conversely, the rear light of a transport case according to the present invention is turned off when the transport case is opened thus separating the contact members from each.

In a preferred embodiment, the first (or base) contact member is provided at the base edge opposite to the hinge, and the second (or lid) contact member is likewise provided at the lid edge opposite to the hinge. In such an arrangement, the second contact member travels through a maximum distance with respect to the first contact member during the pivoting movement of the lid part. Further, the contact members may contact each other substantially perpendicularly to their respective contact surfaces. The arrangement thus ensures a reliable contact between the contact members when the transport case is closed pressing the contact members together.

A long travelling distance between the contact members also allows to provide the first and/or second contact members with a resilient element urging the contact members into contact with each other when the transport case is closed. Such a resilient element may be preferably take the form of a spring-loaded contact pin, ensuring that the contact members stay in contact with each other even when the transport case is vibrating because the motorbike to which the case is fitted is travelling on a jerk road, for example.

In some cases, it may be sufficient to provide the base contact member with one first contact piece at the base part, and the lid contact member with one second contact piece at the lid part because electric current may flow from the motorbike to electric equipment in the lid part through the first and second contact pieces (when the transport case is closed) and return from the electric equipment to the motorbike through a conductive (e.g. metallic) structure of the transport case. In most cases, however, a more reliable, complete electric circuit is formed by providing a specific return path for the current in the form of two additional contact pieces that are in contact with each other when the transport case is in its closed state. If a plurality of separate circuits are required (to power a plurality of independent electric loads such as a stop lamp and a tail light), each circuit requires two contact pieces to feed current forwardly, while the return currents of all the circuits may flow through two common contact pieces.

Advantageously, at least one of the contact members is coated at least partially with a corrosion resistant coating, such as nickel-plated brass, silver or gold, in particular to allow the contacts to resist damp weather conditions to which the transport case may be exposed when fitted to a motorbike.

In a particularly helpful embodiment, the electric path to the lid is used to power an electric load related to the operation of the motorbike on which the transport case is used. Such loads may include a rear lamp such as a stop light, tail light, and/or turn signal of the motorbike. This arrangement enhances the driver's traffic safety even when the transport case obstructs the original on-board rear lighting of the motorbike. Alternatively or additionally, the electric current supplied into the transport case may be used to power any other type of electric equipment, such as a radio receiver or transmitter, a mobile telephone, a battery charger (e.g. for a mobile telephone), a cassette/CD player and/or any other electric apparatus which may be useful even independently of the motorbike, i.e. when the transport case has been detached from the motorbike.

Advantageously, the base conductor is connected to a base connector provided in a wall portion, in particular in a bottom portion, of the base part. The base connector facilitates an electric connection to be established between the electric power supply system of the motorbike and the first contact member provided in the base part of the transport case. The base connector may be a male or female connector mating a complementary connector coupled to the electric power supply system of the motorbike.

Generally, either a horizontal or a vertical wall of the base part may be fitted to the motorbike. The wall of the base part fitted to the motorbike constitutes the "bottom portion" within the meaning of the preceding paragraph. Therefore, the term "bottom portion" is not limited to a lower horizontal wall of the base part. Further, the base part and lid part may be arranged either above or beside each other, with the base part being mounted to a structure (e.g. the rack or an intermediate carrier plate) of the motorbike and the lid part being pivotable with respect to the base part.

Advantageously, at least one contact piece of the base connector is at least partially coated with a corrosion resistant coating, such as nickel-plated brass, silver or gold, in particular to allow the base connector to resist damp weather conditions to which the transport case may be exposed when used on a motorbike.

The base part may be provided with mechanical means for directly fitting (and possibly locking) the base part releasably to a carrier structure of a motorbike, in particular a rack thereof. On the other hand, if the base part is releasably fitted on a carrier plate arranged to be mounted on a structure of a motorbike, in particular a rack thereof, the transport case can be retrofitted more easily and efficiently to an existing motorbike.

In particular, an existing carrier plate may be arranged to be retrofitted with a carrier connector that will mate the base connector when the transport case is fitted on the carrier plate. The retrofitting steps may be performed by the user himself so that he may electrify his existing transport case.

If the carrier structure or carrier plate, respectively, is provided with a carrier connector mating the base connector, the transport case may be automatically connected to an electric power supply line of the motorbike when the transport case is being fitted mechanically to the motorbike. For this purpose, the carrier connector advantageously comprises means for connecting the carrier connector to an electric power supply line of the motorbike to enable the carrier connector to supply electric power from the motorbike generator or battery to the base connector when the transport case has been fitted on the carrier structure or carrier plate, respectively.

Advantageously, at least one contact piece of the carrier connector is at least partially coated with a corrosion resistant coating, such as nickel-plated brass, silver or gold, in particular to allow the carrier connector to resist damp weather conditions to which the carrier connector may be exposed. Preferably, the carrier connector protrudes vertically a few millimetres (e.g. 5 mm) from the fitting surface of the carrier structure or carrier plate, respectively, so that no dangerous residues can deposit and accumulate on the contact pieces of the carrier connector in case of rain or moisture.

The transport case need not comprise its various electric components from the outset. The transport case may be just prepared to be retrofitted (e.g. by the user) with at least one, preferably all, of the following features: the first contact member, the second contact member, the base conductor, the lid conductor, the electric equipment in the lid part, the base connector. Advantageously, the transport case is arranged to be retrofitted at least with the first contact member and the second contact member, wherein the first contact member is arranged to be snapped into a receiving chamber or slot of the base part, and the second contact member is arranged to be snapped into a receiving chamber or slot of the lid part. The electric components to be retrofitted to the transport case and/or to the carrier plate may be manufactured and sold as a retrofitting kit for owners/users of a transport case.

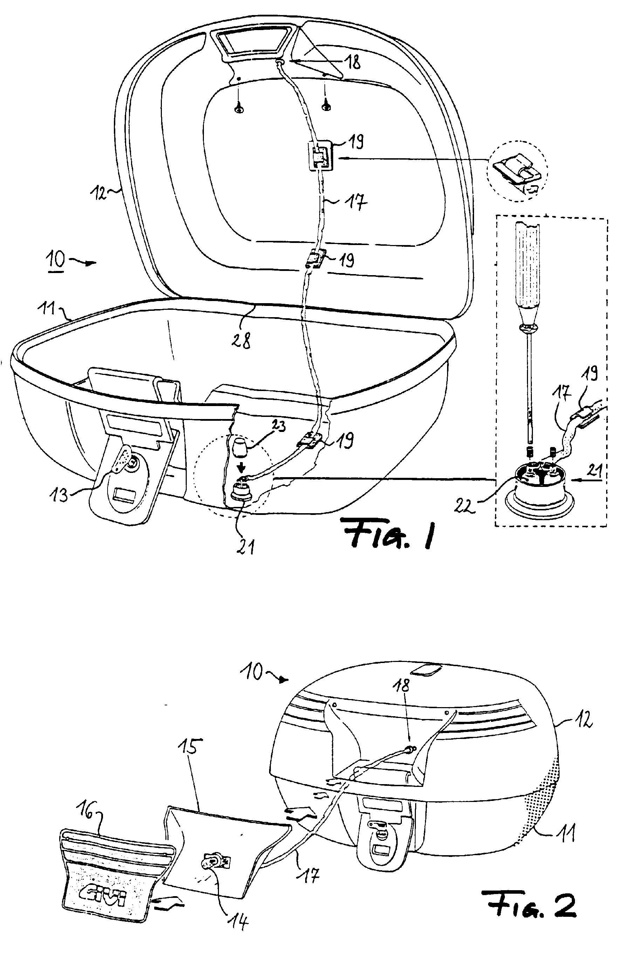

In the following, an exemplary embodiment of the invention will be described in greater detail with reference to the drawings wherein
Figure 1 is a perspective view into an open transport case, with the lid of the case comprising electric equipment in the form of a rear light for a motorbike, the electric lid equipment being arranged to be energised through one cable which conventionally passes across a hinge between the lid part and a base part of the transport case;
Figure 1 further presents an enlarged view of a novel electric base connector to be mounted in the base part of the transport case, preferably in a bottom wall portion thereof.
Figure 2 is a partly exploded perspective view of a closed transport case, with several components of electric equipment being retrofitted to the lid part of the transport case.
Figure 3 is a side elevational view of a transport case fitted to a rack of a motorbike.
Figure 4 illustrates the process of a base connector being inserted in a bottom portion of the base part of the transport case.
Figure 5 illustrates the process of a carrier connector being inserted in a carrier plate.
Figure 6 depicts a transport assembly comprising the transport case according to any of Figures 1 to 4 and a carrier plate according to Figure 5.
Figure 7 is a perspective view into a base part comprising a base connector and a first contact member in accordance with the present invention.
Figure 8 is an enlarged and more detailed perspective view of the interconnected base connector and contact member used in the base part of the transport case shown in Figure 7.
Figures 9 and 10 are perspective views of a second contact member to be attached to the lid part of the transport case in order to cooperate with the first contact member of the base part when the transport case is in its closed state.
Figure 11 is an enlarged perspective view showing details of a carrier connector to be mounted on a rack or carrier plate of a motorbike to supply electric power from the motorbike to the transport case when the transport case has been fitted to the rack or carrier plate.
Figure 12 is a perspective view of a transport case according to the invention comprising base and lid contact members.

Referring to Figures 1 to 3, there is shown a transport case 10 arranged to be releasably attached to the rack 30 of a motorbike (the term motorbike including a motorscooter). The transport case 10 may be attached directly to the rack 30 or to a carrier plate 40 mounted on the rack 30. The transport case 10 comprises a base part 11 and a lid part 12 pivotably linked to the base part 11 by a hinge 28. While the base part 11 is shown to be fitted substantially horizontally to the rack 30 of the motorbike, the subject application also contemplates an alternative arrangement in which the base part 11 may be fitted substantially vertically to a motorbike. In either case, the lid part may be hinged to the base part such that the lid part is pivotable about a horizontal axis or a vertical axis.

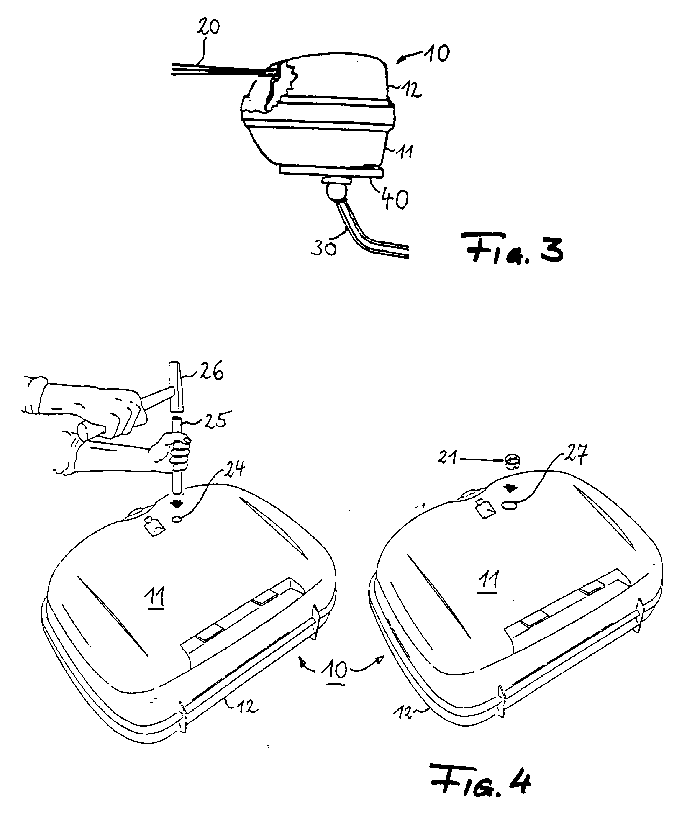

The base part 11 of the transport case 10 may be locked and secured on the rack 30 or carrier plate 40, respectively, through a locking mechanism operable by a key 13 which at the same time (locking system patented by GIVI) may serve to lock the base part 11 and lid part 12 of the transport case 10 in their closed position shown in Figures 2 and 3. Key locking avoids unauthorised, inadvertent or accidental removal of the transport case from the motorbike, and such a locking feature may also help to fix the transport case 10 mechanically on the motorbike in an aligned and tight position ensuring reliable electric contact between mating connectors 21, 42 of the transport case 10 and a carrier plate 40 as described below.

In the transport case 10 illustrated, the lid part 12 is provided with a rear lighting device comprising an electric bulb 14, a reflector 15, and a diffuser 16. These components may be mounted on the transport case 10 by the manufacturer, or retrofitted at a later stage (e.g. by a user) to a prefabricated recess in the transport case 10. The electric bulb 14 can be energised by electric conductors such as a cable 17 which is led through a grommet 18 in the lid part 12 of the transport case 10. Inside the transport case 10, the cable 17 passes along the interior surface of the lid part 12 and - in the prior art - crosses the hinge 28 to reach the interior bottom face of the base part 11 of transport case 10. The cable 17 may be fastened to the inner surface of the transport case 10 by means of adhesive clips 19 or the like. While the cable 17 will normally comprise two insulated wires to ensure the supply of electric energy to the bulb 14, one insulated wire may suffice if the electric supply circuit is closed by grounding the socket of the bulb 14, i.e. by connecting one part of the socket electrically to the body of the motorbike through conductive portions of the transport case 10. When bulb 14 of the rear light is energised, a light beam 20 is emitted rearwards as indicated in Figure 3.

As set out in the introductory portion of the description, the passage of the cable 17 over the hinge 28 is critical for several reasons. Therefore, to avoid a flexible cable passing across the hinge 28, the present invention provides a pair of electric contact members 50, 60 that are in electric contact with each other only when the transport case 10 is in its closed state.

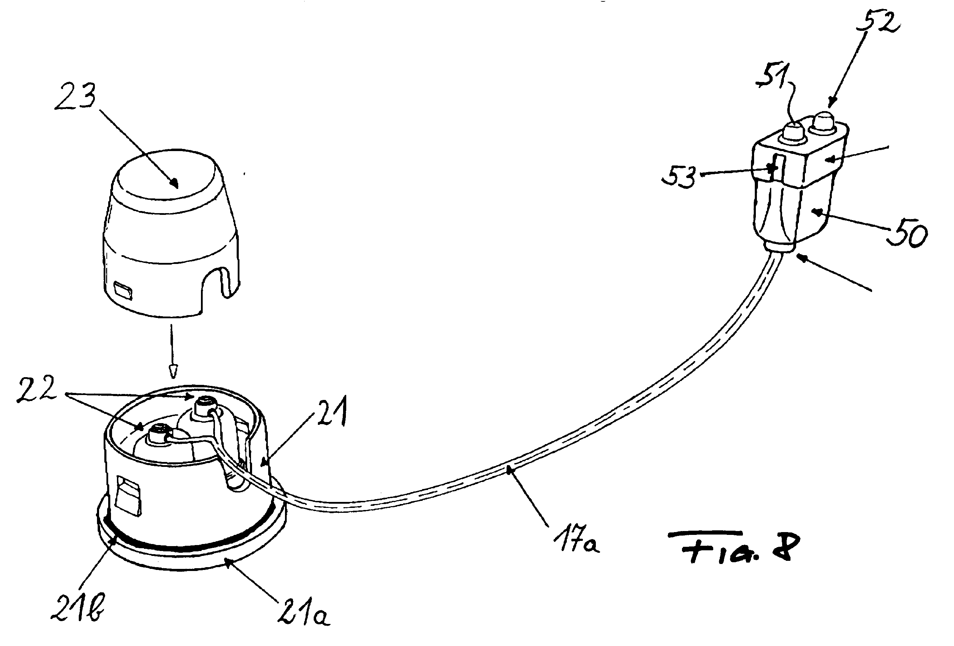

As shown in Figure 7, the first (or base) contact member 50 is mechanically attached to the base part 11 and electrically coupled to a base conductor e.g. in the form of a base cable 17a. More specifically, the base contact member 50 is provided at the base edge 29 opposite to the hinge 28.

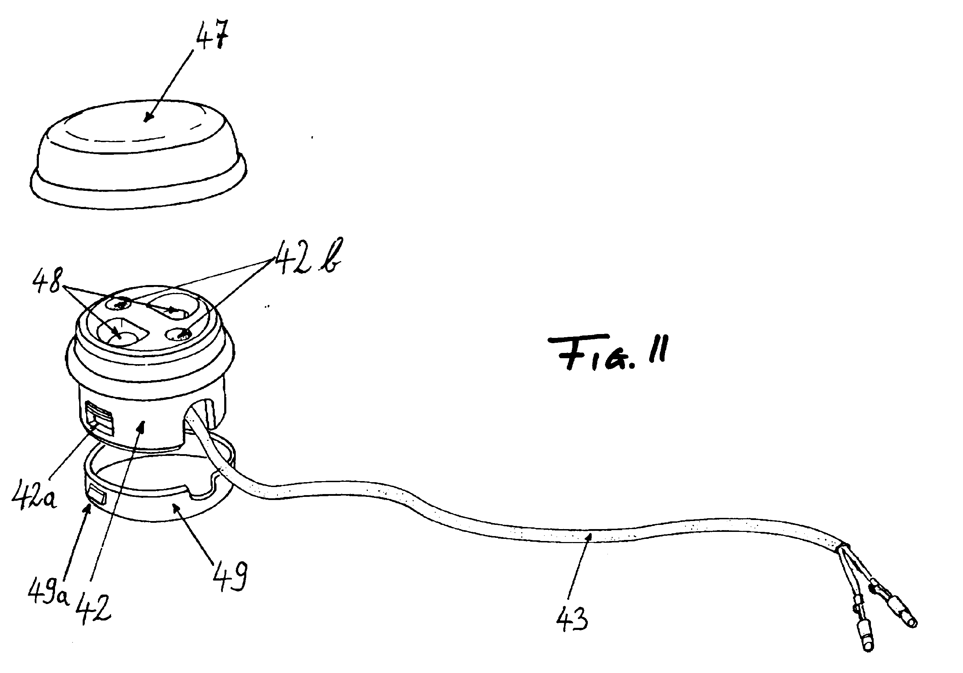

A second (or lid) contact member 60 shown in Figures 9 and 10 is arranged to be mechanically attached to the lid part 12 and electrically coupled to a lid conductor e.g. in the form of a lid cable 17b such that the first and second contact members 50, 60 provide an electric connection between the base cable 17a and the lid cable 17b only when the transport case 10 is in its closed state. More specifically, the lid contact member 60 may be provided at the lid edge opposite the hinge 28 so that the base contact member 50 and the lid contact member 60 face each other and get into electric contact with each other at correlated edge positions on the base part 11 and lid part 12, respectively, when the transport case is closed.

The contact members 50, 60 may take any form of mating electric contact pieces. The contact pieces of both contact members may have flat surfaces. Alternatively, any one of the contact members (either the base contact member 50 or the lid contact member 60) may have a male contact piece arranged to cooperate with a female contact piece of the other contact member.

Preferably, at least one of the contact pieces is provided with a degree of resilience in order to absorb vibration forces acting on the parts of the transport case during travelling of the motorbike to which the transport case is fitted.

Basically, it may be sufficient to provide each contact member 50, 60 with one contact piece in order to establish one current path to one lid conductor. In that case, an electric return path may exist through the structure of the transport case and motorbike. Normally, however, at least a second current path will be provided as a return path to recirculate the current that has been supplied to a first lid conductor. In that case, each of the contact members 50, 60 is provided with two contact pieces, wherein each of the contact pieces of the first contact member 50 mates one respective contact piece of the second contact member 60. Generally, each contact member 50, 60 may be provided with any number of contact pieces, this number corresponding to the number of loads disposed in the lid part 12 plus at least one return path. The contact pieces of each contact member need not be arranged in one integral contact unit but may be distributed over several locations on the transport case.

According to a preferred embodiment of the invention shown in Figures 7 to 10, the base contact member 50 comprises two contact pieces in the form of two contact pins 51, 52 provided adjacent to each other at an edge of the base part 11 and arranged to cooperate (in the closed state of the transport case 10) with two opposing contact pieces provided in the form of two substantially flat contact faces 61, 62 of the lid contact member 60. In an alternative equivalent arrangement, contact pins may be provided in the lid contact member 60 to cooperate with contact faces provided in the base contact member 50.

Preferably, at least one of the contact pieces (i.e. the contact pins 51, 52 and/or the contact faces 61, 62) of at least one of contact members 50, 60 is coated at least partially with a corrosion resistant coating, preferably nickel-plated brass, alternatively with silver or gold.

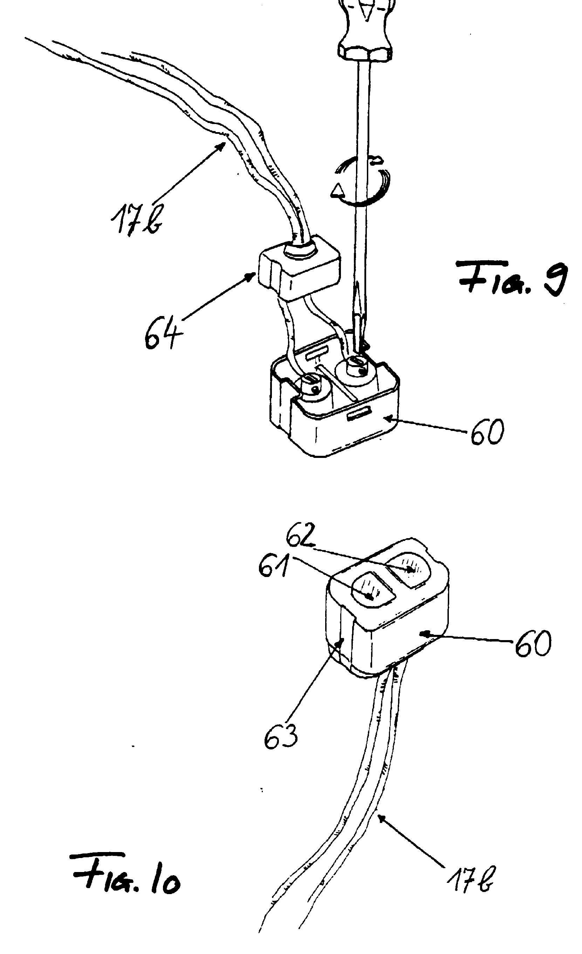

At least one, preferably both of the contact pins 51, 52 depicted in Figures 7 and 8 may be spring-loaded so that the contact pins 51, 52 are urged to the respective opposing contact faces 61, 62 when the transport case is closed. Alternatively, resilience may be provided by any other type of elastic element(s).

The contact faces 61, 62 of the lid contact member 60 are connected to respective lid conductors, in particular to two wires forming a lid cable 17b. A protection cap 64 may be arranged behind the contact faces 61, 62 to protect the conductor connection points (e.g. screw clamps) of the lid contact member 60 from chemical ambient influences and at the same time to relieve the lid conductors from any mechanical strain that might occur during assembly. The lid conductors (e.g. the lid cable 17b) may be connected to electric equipment (e.g. a motorbike rear light 14, 15, 16 as shown in Figure 2) installed in the lid part 12 of the transport case 10. The lid conductors may be fixed to the inner surface of the lid part 12, or may be embedded in the wall material of the lid part 12, or may be firmly held and guided in a channel formed along the inner surface of the lid part 12. When the transport case is opened and closed, i.e. when the lid part 12 is pivoted with respect to the base part 11, the lid conductors (e.g. the lid cable 17b) are not flexed.

The contact pins 51, 52 of the base contact member 50 are connected to respective base conductors, in particular to two wires forming a base cable 17a. The base conductors (e.g. the base cable 17a) may be connected to a base connector 21 penetrating a wall (in particular a bottom wall) of the base part 11 and serving to connect the base contact member 50 to the electric power supply system of the motorbike to which the transport case is to be fitted. The base conductors may be fixed to an interior surface (in particular the interior surface of the bottom wall) of the base part 11, or may be embedded in the wall material of the base part 11, or may be firmly held and guided in a channel 11a formed along the inner surface of the base part 11. When the transport case is opened and closed, i.e. when the lid part 12 is pivoted with respect to the base part 11, the base conductors (e.g. the base cable 17a) are not flexed.

The base part 11 and the base contact member 50 may be arranged such that the base contact member 50 can be retrofitted to the base part 11. For example, an edge of the base part 11 may be manufactured with a receiving chamber or slot into which a user or other person may snap a base contact member 50. To ensure proper and easy positioning of the base contact member 50, the latter may comprise at least one lateral guiding groove 53 that may be engaged by a complementary guiding rib (not shown) of the receiving chamber or slot 70 in the base part 11.

Similarly, the lid part 12 and the lid contact member 60 may be arranged such that the lid contact member 60 can be retrofitted to the lid part 12. For example, an edge of the lid part 12 may be manufactured with a receiving chamber or slot (not shown) into which a user or other person may snap a lid contact member 60. To ensure proper and easy positioning of the lid contact member 60, the latter may comprise at least one lateral guiding groove 63 that may be engaged by a complementary guiding rib (not shown) of the receiving chamber or slot in the lid part 12.

Referring to Figures 1 and 7, the base connector 21 will be described in greater detail. The ends of the base conductors (i.e. of the base cable 17a) may be screwed to conductive elements 22 of the base connector 21, as shown specifically in the rectangular dotted box supplementing Figure 1. The conductive elements 22 of the base connector 21 are preferably spring-loaded to ensure a reliable connection (even in the presence of vibrations or shocks) with a carrier connector 42 to be described below. Once the base cable 17a has been coupled to the base connector 21, the internal connector elements 22 may be protected (from objects contained in the transport case 10) by an insulating cap 23 in particular with a view to avoiding any short circuit across the elements 22 or between an element 22 and the (possibly metallic) housing of base connector 21. A similar cap may be provided to protect the base connector 21 from below the transport case 10 when the transport case 10 has been detached from the motorbike. The insulating cap(s) may also serve to protect the conductive elements 22 of the base connector 21 from dust, humidity and other causes of corrosion. In order to ensure water tightness of the transport case 10, an annular seal 21b is provided around an external flange 21a of the base connector 21. Thus, when the cylindric main body of the base connector 21 has been inserted in a corresponding circular bottom opening 27 of the base part 11 (as described below), the sealing ring 21b is pressed between the connector flange 21a and the external bottom surface of the base part 11 to seal the opening 27.

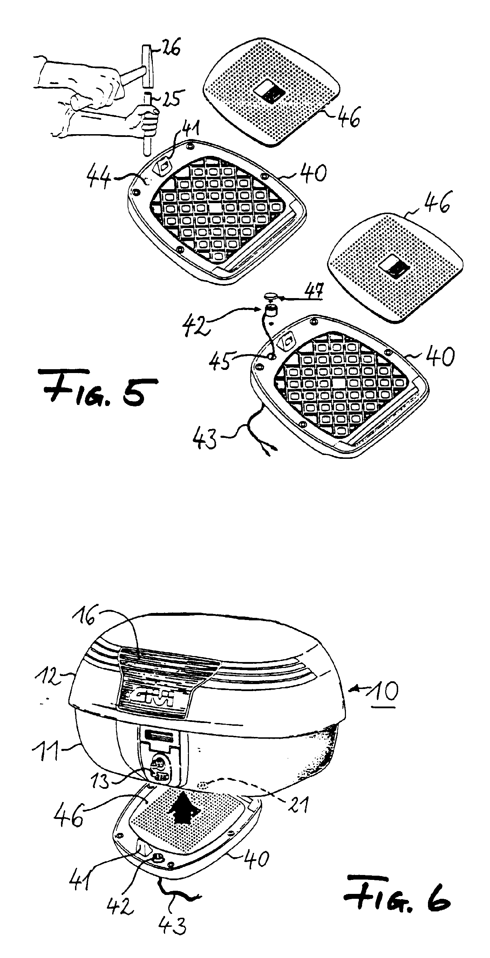

With reference to Figure 4, the electric base connector 21 may be inserted (possibly retrofitted) in the bottom of transport case 10 in the following manner. A predetermined area of the bottom face may have been identified (by the manufacturer) by a small circle 24 indicating an easily removable wall portion. For example, the wall material may be thinner at the periphery of the removable wall portion than the general wall thickness of the transport case 10. With the help of a punching tool 25 and a hammer 26, the removable wall portion may be manually driven out of the bottom wall to form an opening 27 the size and shape of which correspond to the size (e.g. diameter) and shape (i.e. cross section) of the base connector 21. Subsequently, the base connector 21 can be inserted in the opening 27 and coupled to the wire end(s) of base cable 17a.

To avoid modifications to the rack 30 of a motorbike, a carrier plate 40 (Figures 3, 5 and 6) may be preferably fixed to the rack 30 to releasably receive the transport case 10 thereon. The carrier plate 40 may comprise a locking nose 41 cooperating with a locking mechanism of transport case 10 to secure the latter to the carrier plate 40.

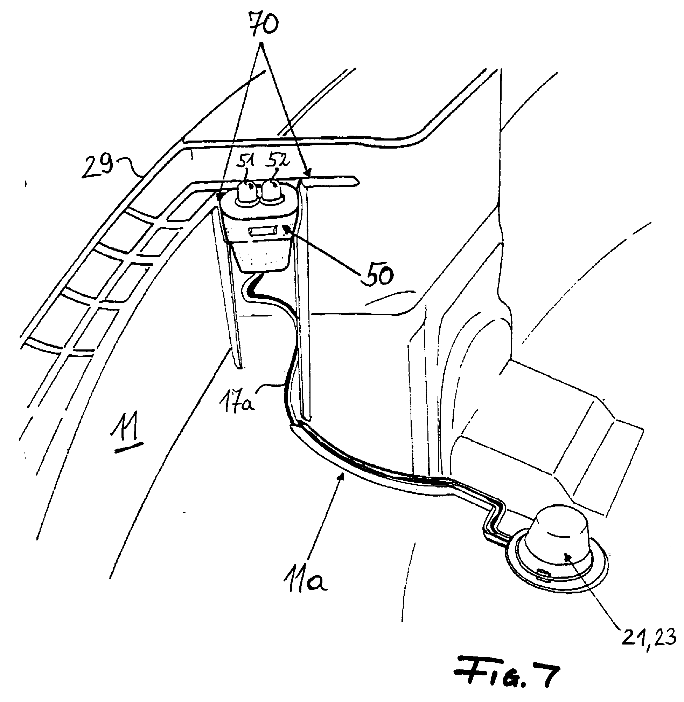

Preferably, the carrier plate 40 is provided with a carrier connector 42 (Figures 5, 6 and 11) arranged at a plate location corresponding to the location of the base connector 21 in the base part 11 of transport case 10 so that the two mating connectors 21, 42 are aligned and interconnected when the transport case 10 is being attached to the carrier plate 40 (Figure 6). Alternatively, the carrier connector 42 may be installed directly in the rack 30 of the motorbike at a corresponding location. In any event, it will be appreciated that the base connector 21 may be a male connector and the carrier connector 42 may be a female connector, or vice versa. Owing to the connectors 21 and 42, an electric connection of the transport case 10 to the motorbike can be established substantially at the same time as the transport case 10 is attached mechanically. When the transport case 10 is detached from the carrier plate 40 (or rack 30, respectively), the connectors 21, 42 are separated from each other.

The carrier connector 42 may be wired to the on-board battery and/or generator of the motorbike through a carrier cable 43. Like the base cable 17a and lid cable 17b, the carrier cable 43 may comprise one or two (or more) wires, and like the male base connector 21, the female carrier connector 42 may comprise one or two (or more) contact elements 48, depending on whether or not a conductive (metal) structure of the motorbike and transport assembly 10, 40 is utilised as part of the return circuit for the electric equipment provided in transport case 10, and depending on the number of electric loads to be powered in the lid part 12. After the carrier cable 43 has been connected to the carrier connector 42, a protective bottom cap 49 may be fixed to the bottom of the carrier connector 42 with the help of at least one tongue 49a arranged to snap into an elongated aperture 42a.

With reference to Figures 5, 6 and 11, the carrier connector 42 may be inserted (possibly retrofitted) in the carrier plate 40 in the following manner. A predetermined area of the carrier plate 40 constitutes an easily removable plate portion 44. For example, the plate material may be thinner at the periphery of the removable plate portion 44 than the general plate thickness. With the help of a punching tool 25 and a hammer 26, the removable plate portion 44 may be manually driven out of the plate material to form an opening 45 the size and shape of which correspond to the size (e.g. diameter) and shape (i.e. cross section) of the carrier connector 42. Subsequently, the carrier connector 42 can be inserted in the opening 45 and coupled to the carrier cable 43. In the detached state of the transport case 10, an insulating cap 47 may protect the carrier connector 42 from water, corrosion and/or electric short-circuiting across the contact elements 48 (sockets or pins) and/or the housing of carrier connector 42. The cap 47 may be fitted onto the carrier connector 42 with the help of at least one pin which can be inserted in bores 42b provided in the top surface of the carrier connector 42.

Preferably, the carrier connector 42 protrudes (a few millimetres, e.g. 5 mm) vertically from the fitting surface of the carrier structure 30 or carrier plate 40, respectively, to further protect the carrier connector 42 from undesirable deposits such as water and/or corrosive materials.

A protective sheet 46, e.g. made of rubber or a synthetic material, may be placed on the carrier plate 40 to protect the transport case 10 from scratches, shocks, undesired movements and/or noise which might occur when attaching the transport case 10 to carrier plate 40 or when driving a motorbike on a rugged road.

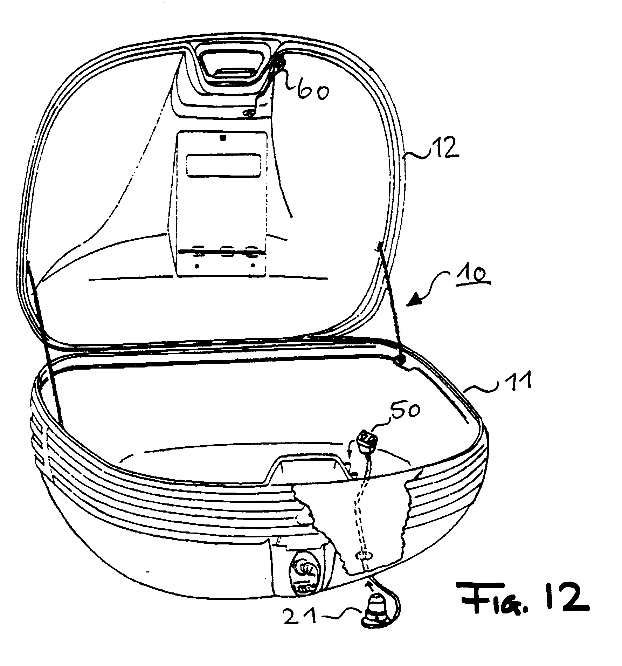

Figure 12 is a perspective view of a transport case comprising a base contact member 50 and a lid contact member 60 ready for mounting in the base part 11 and in the lid part 12, respectively. This arrangement constitutes the basic form of the invention. A base connector 21 is shown prior to its assembly into the bottom of the base part 11.

While the transport case 10 of the preferred embodiment described above has been illustrated as being mounted on a substantially horizontal carrier plate 40, it will be appreciated that the features of the invention as specified in the claims and the advantages achieved thereby can be utilised in any orientation of the carrier plate, with the transport case attached to it in an analogous manner.

Likewise, the transport case disclosed (or the assembly comprising a carrier plate 40 and a transport case 10) is not restricted to being mounted and fitted on the rear structure of a motorbike. The invention also contemplates transport cases and assemblies for use on lateral or front structures of a motorbike. For example, the electric equipment provided in the transport case may represent a side lamp or even a headlight of a motorbike.

In any event, as mentioned in the introductory portion of the description, the electric equipment provided in the transport case is not restricted to lighting devices of the motorbike. Other electrical functions of the transport case, such as the operation of audio equipment, may be used by the driver of a motorbike when the transport case has been attached to the motorbike.

While in the exemplary embodiments the shape of the electric connectors 21, 42 has been illustrated as being substantially cylindric, the cross-section of suitable connectors may take any alternative geometric form, e.g. square, rectangular, generally polygonal, etc.

### List of reference signs

- 10: transport case
- 11: base part of the transport case
- 11a: cable channel
- 12: lid part of the transport case
- 13: locking key
- 14: electric bulb
- 15: reflector
- 16: diffuser
- 17: cable
- 17a: base cable
- 17b: lid cable
- 18: grommet
- 19: fastening clips
- 20: light beam
- 21: base connector
- 21a: connector flange
- 21b: annular seal
- 22: connector elements
- 23: insulating cap
- 24: identifier circle
- 25: punching tool
- 26: hammer
- 27: wall opening
- 28: hinge
- 29: base edge opposite to the hinge

- 30: rack of a motorbike

- 40: carrier plate
- 41: locking nose
- 42: carrier connector
- 42a: aperture
- 42b: bore
- 43: cable
- 44: removable plate portion
- 45: plate opening
- 46: protective sheet
- 47: insulating cap
- 48: contact elements
- 49: bottom cap
- 49a: tongue

- 50: base contact member
- 51: contact pin
- 52: contact pin
- 53: guiding groove

- 60: lid contact member
- 61: contact face
- 62: contact face
- 63: guiding groove
- 64: protection cap

- 70: receiving chamber or slot

## Claims

1. A transport case (10) arranged to be releasably fitted to a motorbike (30) and comprising a base part (11) and a lid part (12) hinged to the base part (11) such that the lid part (12) can be pivoted away from the base part (11) to open the transport case (10) and pivoted toward the base part (11) to close the transport case (10), the base part (11) being provided with an electric base conductor such as a base cable (17a), and the lid part (12) being provided with an electric lid conductor such as a lid cable (17b), *characterised in that* the transport case (10) comprises first and second electric contact members (50, 60) that are in electric contact with each other when the transport case (10) is in its closed state and are not in electric contact with each other when the transport case (10) is in its open state, the first contact member (50) being mechanically attached to the base part (11) and electrically coupled to the base conductor (17a), the second contact member (60) being mechanically attached to the lid part (12) and electrically coupled to the lid conductor (17b) such that in the closed state of the transport case (10) the first and second contact members (50, 60) provide an electric connection between the base and lid conductors (17a, 17b), and in the open state of the transport case (10) the first and second contact members (50, 60) do not provide an electric connection between the base and lid conductors (17a, 17b).

2. The transport case (10) according to claim 1, characterised in that the first contact member (50) is provided at the base edge (29) opposite to the hinge (28), and the second contact member (60) is provided at the lid edge opposite to the hinge (28).

3. The transport case (10) according to claim 1 or 2, characterised in that at least one (50) of the first and second contact members (50, 60) comprises a resilient element urging the contact member (50, 51, 52) into contact with the other contact member (60, 61, 62).

4. The transport case (10) according to claim 3, characterised in that at least one (50) of the first and second contact members (50, 60) comprises at least one spring-loaded contact pin (51, 52).

5. The transport case (10) according to any of claims 1 to 4, characterised in that the first contact member (50) comprises a plurality N 2 of first contact pieces (51, 52) connected to N base conductors (17a), and the second contact member (60) comprises N second contact pieces (61, 62) connected to N lid conductors (17b), each of the first contact pieces (51, 52) being in electric contact with a respective one of the second contact pieces (61, 62) when the transport case (10) is in its closed state, and none of the first contact pieces (51, 52) being in electric contact with any of the second contact pieces (61, 62) when the transport case (10) is in its open state.

6. The transport case (10) according to any of claims 1 to 5, characterised in that at least one of the contact members (50, 60) is coated at least partially with a corrosion resistant coating such as nickel-plated brass, silver or gold.

7. The transport case (10) according to any of claims 1 to 6, characterised in that the lid conductor (17b) is connected to electric equipment mounted in the lid part (12), such as a lamp (14), in particular a stop light or tail light of a motorbike.

8. The transport case (10) according to claim 7, characterised in that at least a portion of the lid conductor (17b) is guided in a channel formed on the interior surface of the lid part (12).

9. The transport case (10) according to any of claims 1 to 8, characterised in that the base conductor (17a) is connected to a base connector (21) provided in a wall portion, in particular in a bottom portion, of the base part (11).

10. The transport case (10) according to claim 9, characterised in that at least one contact element (22) of the base connector (21) is coated at least partially with a corrosion resistant coating such as nickel-plated brass, silver or gold.

11. The transport case (10) according to claim 9 or 10, characterised in that at least a portion of the base conductor (21) is guided in a channel (11a) formed on the interior surface of the base part (11).

12. The transport case (10) according to any of claims 1 to 11, characterised in that the base part (11) is provided with mechanical means (13, 41) for fitting the base part (11) releasably to a carrier structure of a motorbike, in particular a rack (30) thereof.

13. The transport case (10) according to any of claims 1 to 11, characterised in that the base part (11) is releasably fitted on a carrier plate (40) arranged to be mounted on a structure of a motorbike, in particular a rack (30) thereof.

14. The transport case (10) according to claim 13, characterised in that the carrier plate (40) is arranged to be retrofitted with a carrier connector (42) mating the base connector (21) when the transport case (10) is fitted on the carrier plate (40).

15. The transport case (10) according to claim 12 or 13, characterised in that the carrier structure (30) or carrier plate (40), respectively, is provided with a carrier connector (42) mating the base connector (21) when the transport case (10) is fitted on the carrier structure (30) or carrier plate (40), respectively.

16. The transport case (10) according to claim 15, characterised in that at least one contact element of the carrier connector (42) is at least partially coated with a corrosion resistant coating such as nickel-plated brass, silver or gold.

17. The transport case (10) according to claim 15 or 18, characterised in that the carrier connector (42) protrudes vertically from the fitting surface of the carrier structure (30) or carrier plate (40), respectively.

18. The transport case (10) according to any of claims 15 to 17, characterised in that the carrier connector (42) comprises means (43) for connecting the carrier connector (42) to an electric power supply line of a motorbike to enable the carrier connector (42) to supply electric power from a motorbike generator or battery to the base connector (21) when the transport case (10) is fitted on the carrier structure (30) or carrier plate (40), respectively.

19. The transport case (10) according to any of claims 1 to 18, characterised in that the transport case (10) is arranged to be retrofitted with at least one, preferably all, of the following features: the first contact member (50), the second contact member (60), the base conductor (17a), the lid conductor (17b), the electric equipment (14, 15, 16) in the lid part (12), the base connector (21).

20. The transport case (10) according to any of claims 1 to 18, characterised in that the transport case (10) is arranged to be retrofitted at least with the first contact member (50) and the second contact member (60), wherein the first contact member (50) is arranged to be snapped into a receiving chamber or slot (70) of the base part (11), and the second contact member (60) is arranged to be snapped into a receiving chamber or slot of the lid part (12).
